# EUROPEAN PATENT APPLICATION

(11) **EP 4 813 681 A1**
(43) Date of publication of application: **30.09.2026**
(21) Application number: 26166315.7
(22) Date of filing: 20.03.2026
(51) Int. Cl.: B60J 5/04, B60J 10/33, B60J 10/76

(54) **VEHICLE DOOR**

(30) Priority: 28.03.2025 JP 2025056362
(71) Applicant: AISIN CORPORATION, Kariya, Aichi 448-8650 (JP)
(72) Inventor: SATO, Tomoya, Kariya, Aichi, 448-8650 (JP); YAMADA, Makoto, Kariya, Aichi, 448-8650 (JP); KADOTA, Takeo, Kariya-shi, Aichi-ken, 448-0002 (JP); KAWAGUCHI, Akitoshi, Kariya-shi, Aichi-ken, 448-0002 (JP); KAWAI, Shinya, Kariya-shi, Aichi-ken, 448-0002 (JP); ADACHI, Kentaro, Kiyosu-shi, Aichi-ken, 452-8564 (JP); YAMATO, Yuta, Kiyosu-shi, Aichi-ken, 452-8564 (JP)
(74) Representative: TBK

(57) **Abstract**

Provided is a vehicle door that prevents formation of a gap between a sash molding and a sash garnish. In a vehicle door (10), a glass run (60) includes an extended portion (70) extending rearward from a rear end of an upper portion (63) and being held by an end cap (80). The extended portion (70) includes a cover lip (77) closing a gap between a sash molding (40) and a sash garnish (50).

## Description

### TECHNICAL FIELD

This disclosure generally relates to a vehicle door.

### BACKGROUND DISCUSSION

In recent years, flush surfacing of vehicle doors has been increasingly adopted in order to enhance design aesthetics of vehicle doors and reduce air resistance of the vehicle doors during traveling. For example, JP2005-297602A (Reference 1) describes a vehicle door that reduces a step between a window glass and a division pillar.

In the vehicle door as described above, for the flush surfacing of the vehicle door, a sash garnish covering a rear sash of a door frame may be disposed further inward in a vehicle width direction than in conventional vehicle doors. In this case, a gap is likely to be formed between a sash molding covering an upper sash of the door frame, and the sash garnish.

A need thus exists for a vehicle door that prevents formation of a gap between the sash molding and the sash garnish.

### SUMMARY

A vehicle door configured to solve the above-described problem includes: a door frame including a rear sash and a front sash that are spaced apart in a front-rear direction and configured to guide a movable panel to move up and down, and an upper sash connecting an upper end of the rear sash and an upper end of the front sash in the front-rear direction; a glass run including a rear portion to be fitted into the rear sash, a front portion to be fitted into the front sash, and an upper portion to be fitted into the upper sash; a sash molding to be disposed along an upper end of the door frame; a sash garnish covering the rear sash at a position shifted downward relative to the sash molding; and an end cap to be attached to a rear end of the sash molding. The glass run includes an extended portion extending rearward from a rear end of the upper portion and being held by the end cap. The extended portion includes a blocking portion closing a gap between the sash molding and the sash garnish.

### BRIEF DESCRIPTION OF THE DRAWINGS

The foregoing and additional features and characteristics of this disclosure will become more apparent from the following detailed description considered with the reference to the accompanying drawings, wherein:
FIG. 1 is a side view of a vehicle door according to an embodiment;
FIG. 2 is an exploded perspective view of the vehicle door in FIG. 1;
FIG. 3 is a partial exploded perspective view of the vehicle door in FIG. 1;
FIG. 4 is a partial exploded perspective view of the vehicle door in FIG. 1;
FIG. 5 is a partial exploded perspective view of the vehicle door in FIG. 1;
FIG. 6 is a cross-sectional view taken along a line 6-6 in FIG. 1;
FIG. 7 is a cross-sectional view taken along a line 7-7 in FIG. 1;
FIG. 8 is a cross-sectional view taken along a line 8-8 in FIG. 1; and
FIG. 9 is a cross-sectional view when fitting a glass run into an end cap in the vehicle door in FIG. 1.

### DETAILED DESCRIPTION

Hereinafter, an embodiment of a vehicle door is described.

### <Configuration of This Embodiment>

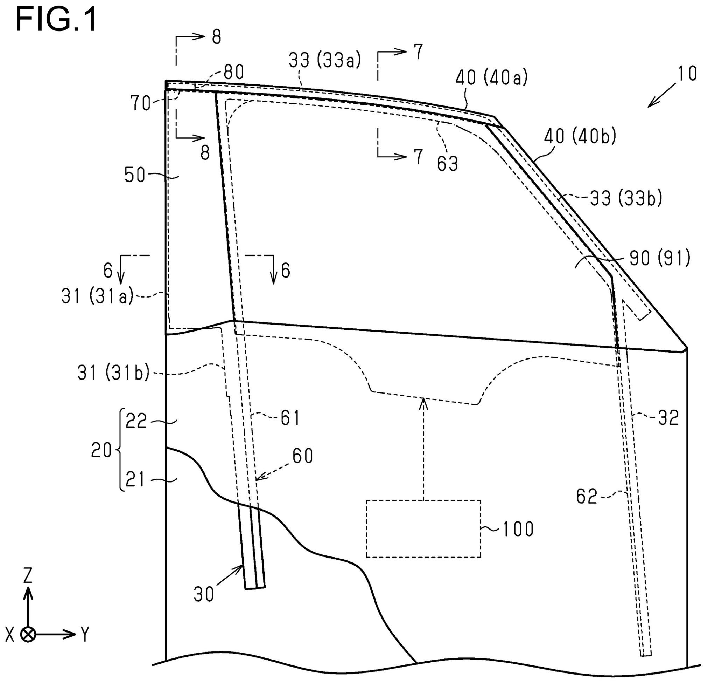

As illustrated in FIG. 1, a vehicle door 10 includes a door body 20, a door frame 30, a sash molding 40, a sash garnish 50, a glass run 60, an end cap 80, a movable panel 90, and a window regulator 100.

In this embodiment, the vehicle door 10 is a front door on the right side of a vehicle. The vehicle door 10 is a swing door rotatable between a fully closed position for fully closing a door opening of the vehicle and a fully open position for fully opening the door opening. Hereinafter, the thickness direction of the vehicle door 10 is referred to as "thickness direction X," and a direction in which a rotation axis of the vehicle door 10 extends is referred to as an "up-down direction Z." Further, a portion of the vehicle door 10 rotatably supported by a vehicle body via a door hinge is referred to as a front end of the vehicle door 10. On the other hand, a portion of the vehicle door 10 restrained by the vehicle body via a door lock mechanism is referred to as a rear end of the vehicle door 10.

In this embodiment, the up-down direction Z of the vehicle door 10 coincides with an up-down direction of the vehicle. Further, a front-rear direction Y of the vehicle door 10 in the fully closed position coincides with a front-rear direction of the vehicle. Further, the thickness direction X of the vehicle door 10 in the fully closed position coincides with a width direction of the vehicle. Hereinafter, the configuration of the vehicle door 10 is described in accordance with the directions of the vehicle door 10. That is, components of the vehicle door 10 are described by using the directions of the vehicle door 10.

### <Door Body 20>

As illustrated in FIG. 1, the door body 20 includes an inner panel 21 and an outer panel 22. A material of the door body 20 may be a lightweight and highly rigid metal material. Both the inner panel 21 and the outer panel 22 are plate-shaped. The inner panel 21 and the outer panel 22 are joined by welding or the like. A space for accommodating the components of the vehicle door 10 exists between the inner panel 21 and the outer panel 22.

### <Door Frame 30>

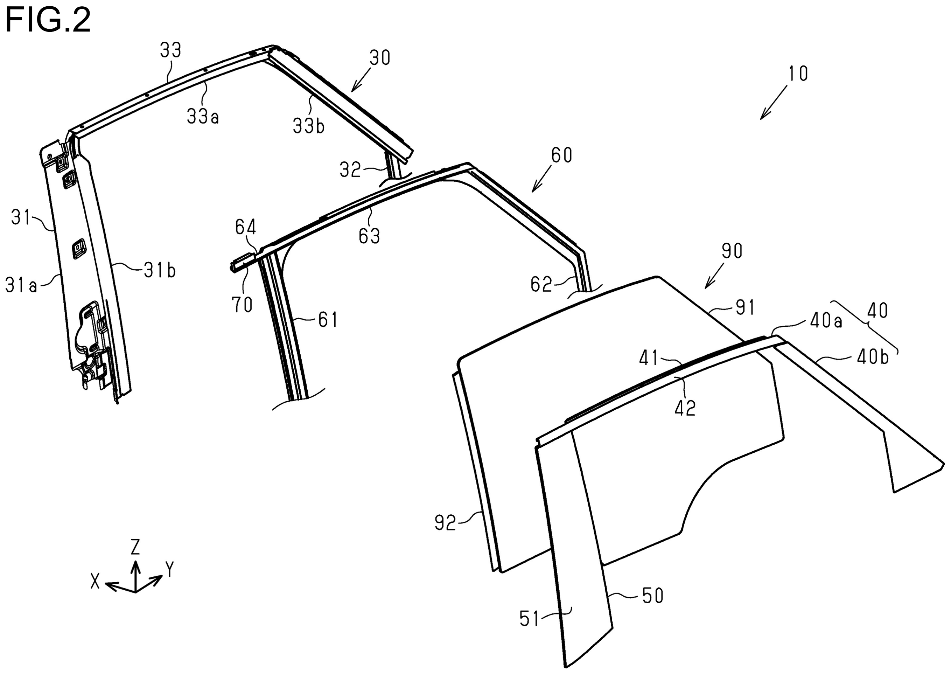

As illustrated in FIG. 2, the door frame 30 includes a rear sash 31, a front sash 32, and an upper sash 33. A material of the door frame 30 may be a lightweight and highly rigid metal material. The door frame 30 may be configured by joining two panels together, for example, similarly to the door body 20.

The rear sash 31 has a vertical pillar portion 31a and a sash portion 31b. The vertical pillar portion 31a is a flat tubular member. A longitudinal direction of the vertical pillar portion 31a is the up-down direction Z. The vertical pillar portion 31a is a portion overlapping a center pillar of the vehicle when the vehicle door 10 is in the fully closed position. The sash portion 31b is a tubular member. A longitudinal direction of the sash portion 31b is the up-down direction Z. The length of the sash portion 31b is longer than that of the vertical pillar portion 31a. Specifically, an upper end of the sash portion 31b coincides with an upper end of the vertical pillar portion 31a, while a lower end of the sash portion 31b is positioned lower than a lower end of the vertical pillar portion 31a. The sash portion 31b is a rail component for guiding the movable panel 90 to move up and down. The vertical pillar portion 31a and the sash portion 31b are integrally formed. The vertical pillar portion 31a is a rear portion of the rear sash 31, and the sash portion 31b is a front portion of the rear sash 31.

The front sash 32 is a tubular member. A longitudinal direction of the front sash 32 is the up-down direction Z. The longitudinal direction of the front sash 32 is substantially the same as that of the sash portion 31b of the rear sash 31. The front sash 32 is spaced apart from the rear sash 31 in the front-rear direction Y. The front sash 32 extends parallel to the rear sash 31. The front sash 32 is a rail component for guiding the movable panel 90 to move up and down. The upper sash 33 is a tubular member. The upper sash 33 connects the upper end of the sash portion 31b of the rear sash 31 and an upper end of the front sash 32 in the front-rear direction Y. The upper sash 33 has a first portion 33a extending in the front-rear direction Y, and a second portion 33b extending downward as it advances forward from a front end of the first portion 33a. A rear end of the first portion 33a is connected to the rear sash 31. A front end of the second portion 33b is connected to the upper end of the front sash 32.

As illustrated in FIG. 1, the door frame 30 is connected to the door body 20. Thus, the door frame 30 constitutes a window frame of the vehicle door 10.

### <Sash Molding 40>

As illustrated in FIG. 2, the sash molding 40 has a first molding 40a and a second molding 40b.

The first molding 40a is rod-shaped. The length of the first molding 40a is longer than that of the first portion 33a of the upper sash 33 of the door frame 30. The first molding 40a is formed, for example, by roll forming a metal plate material.

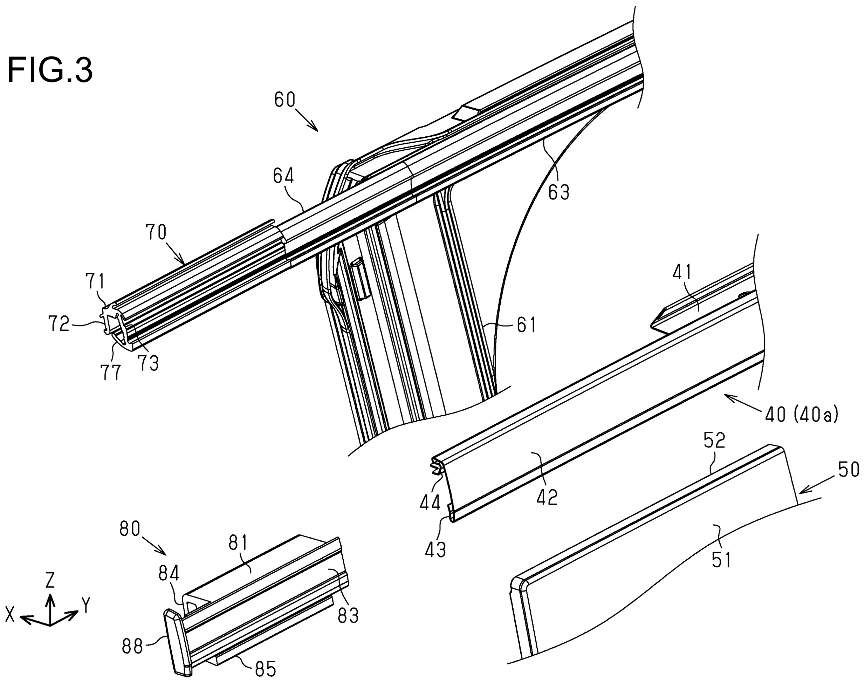

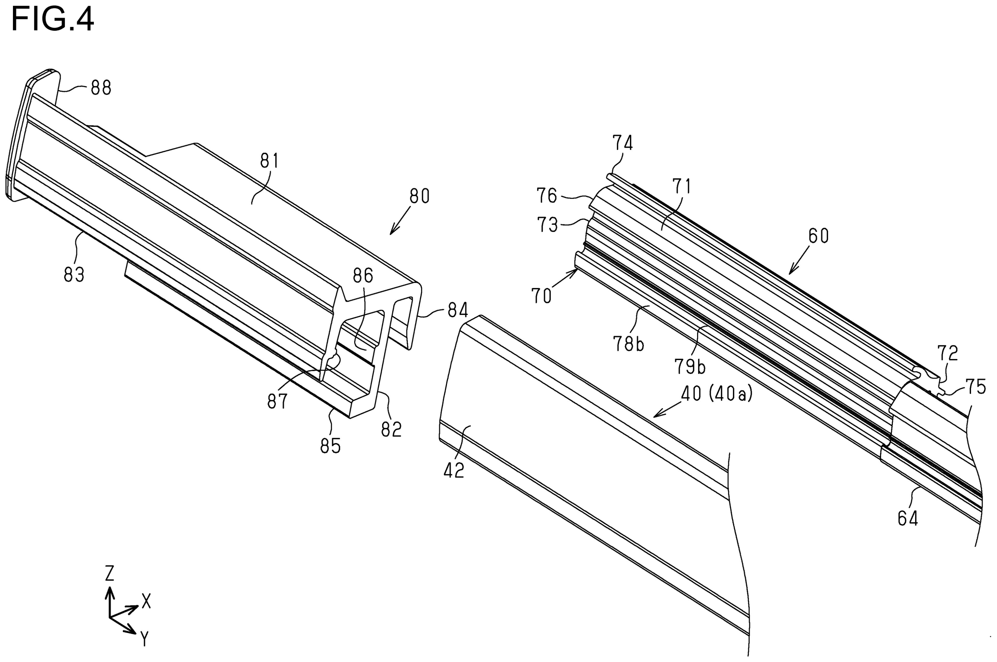

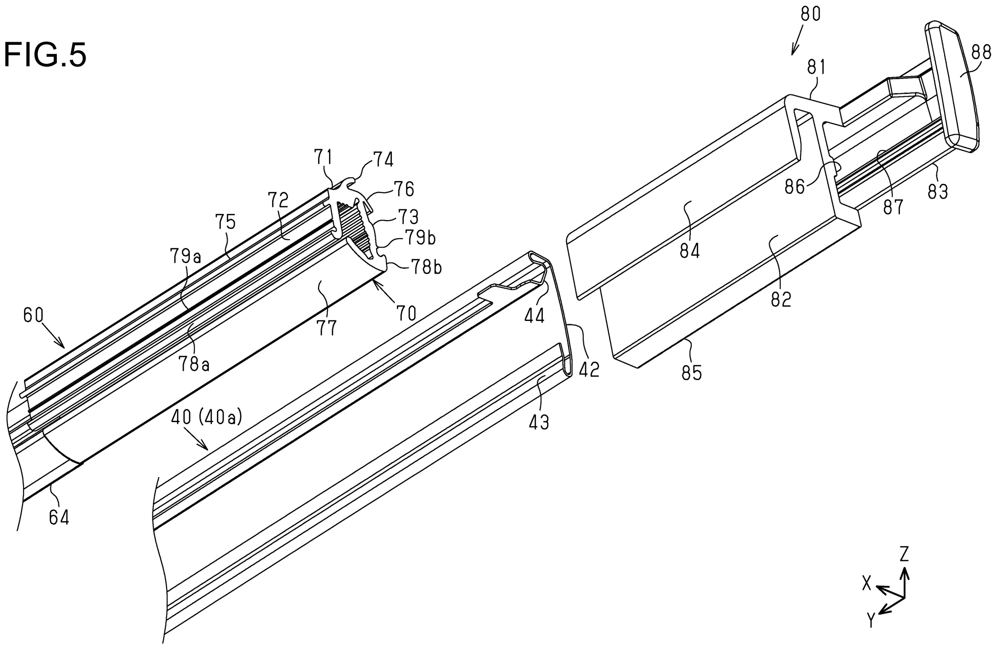

As illustrated in FIG. 3 to FIG. 5, the first molding 40a includes a fixing plate 41, a design plate 42, a lower pinching plate 43, and an upper pinching plate 44.

The fixing plate 41 intersects the up-down direction Z. The design plate 42 intersects the thickness direction X. The lower pinching plate 43 is connected to a lower end of the design plate 42. A gap exists between the lower pinching plate 43 and the design plate 42 in the thickness direction X. The upper pinching plate 44 is connected to an upper end of the design plate 42. A gap exists between the upper pinching plate 44 and the design plate 42 in the thickness direction X. In the first molding 40a, rear ends of the design plate 42, the lower pinching plate 43, and the upper pinching plate 44 coincide with one another. In contrast, a front end of the fixing plate 41 is positioned rearward relative to front ends of the design plate 42, the lower pinching plate 43, and the upper pinching plate 44.

As illustrated in FIG. 1, the first molding 40a is fixed to the door frame 30 along an upper end of the door frame 30. Specifically, the first molding 40a is fixed to the first portion 33a of the upper sash 33 via the fixing plate 41. For fixing the first molding 40a, for example, a fixing member such as a rivet may be used. In a state where the first molding 40a is fixed to the upper sash 33, a rear end of the first molding 40a is positioned rearward relative to the rear end of the first portion 33a of the upper sash 33. That is, when the vehicle door 10 is viewed along the width direction, the first molding 40a projects rearward from the upper sash 33. The first molding 40a may be fixed to the vertical pillar portion 31a of the door frame 30. In this case, the first molding 40a may be caulked and fixed to the vertical pillar portion 31a of the door frame 30.

As illustrated in FIG. 1 and FIG.2, the second molding 40b is panel-shaped. The second molding 40b is formed, for example, by injection molding a resin material. The second molding 40b is fixed to the second portion 33b of the upper sash 33. For fixing the second molding 40b, for example, a fixing member such as double-sided tape and a clip may be used.

### <Sash Garnish 50>

As illustrated in FIG. 2 and FIG. 3, the sash garnish 50 has a main body portion 51 and a locking wall 52. A material of the sash garnish 50 may be, for example, a resin material.

The main body portion 51 is a plate-shaped member equivalent in size to the vertical pillar portion 31a of the rear sash 31. The locking wall 52 extends from an upper end of the main body portion 51. An extending direction of the locking wall 52 coincides with the plate thickness direction of the main body portion 51. The sash garnish 50 is attached to the vertical pillar portion 31a of the rear sash 31. At this time, the sash garnish 50 is positioned lower than a rear end of the sash molding 40. The sash garnish 50 may be bonded to the rear sash 31, or may be fixed to the rear sash 31 by a fixing member such as double-sided tape and a clip.

### <Glass Run 60>

As illustrated in FIG. 2, the glass run 60 has a rear portion 61, a front portion 62, an upper portion 63, a connecting portion 64, and an extended portion 70. A material of the glass run 60 may be, for example, an elastomer such as rubber and resin having appropriate elasticity. In this case, a manufacturing method of the glass run 60 may be injection molding.

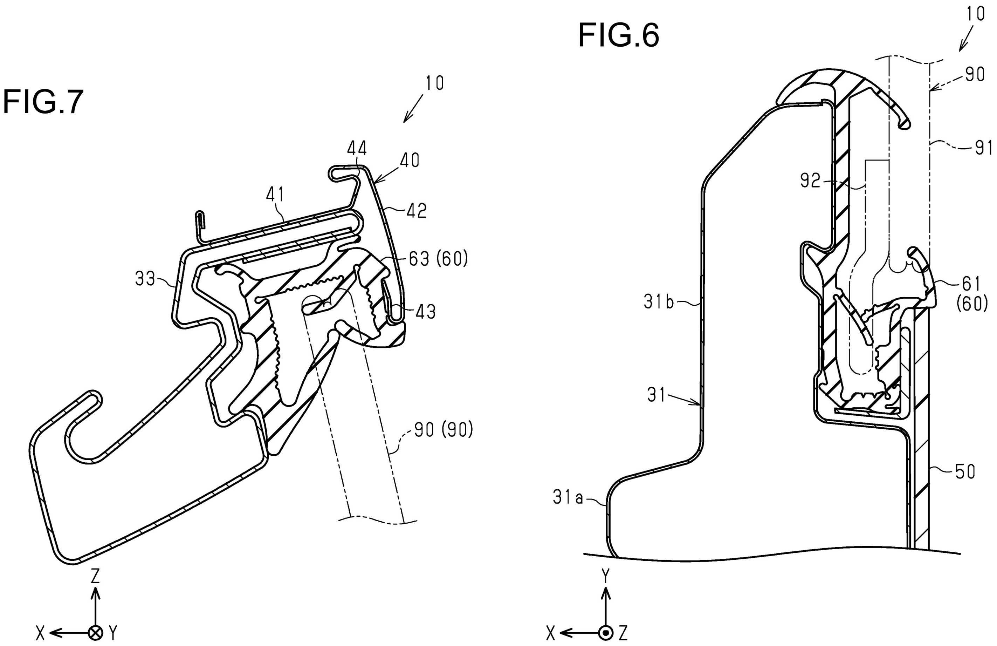

As illustrated in FIG. 6, the rear portion 61 has a plurality of lips. The rear portion 61 is fitted into the sash portion 31b of the rear sash 31. Although not illustrated, the front portion 62 has a plurality of lips similarly to the rear portion 61. The front portion 62 is fitted into the front sash 32 similarly to the rear portion 61. As illustrated in FIG. 7, the upper portion 63 has a plurality of lips. The upper portion 63 is fitted into the upper sash 33 and the sash molding 40.

As illustrated in FIG. 2 and FIG. 3, the connecting portion 64 extends rearward from a rear end of the upper portion 63. The connecting portion 64 connects the upper portion 63 and the extended portion 70 in the front-rear direction Y. In this embodiment, a cross-sectional shape perpendicular to a longitudinal direction of the connecting portion 64 is different from that perpendicular to a longitudinal direction of the upper portion 63, and is different from that perpendicular to a longitudinal direction of the extended portion 70 described later. In another embodiment, the cross-sectional shape perpendicular to the longitudinal direction of the connecting portion 64 may be the same as that perpendicular to the longitudinal direction of the upper portion 63, or may be the same as that perpendicular to the longitudinal direction of the extended portion 70.

As illustrated in FIG. 2 and FIG. 3, the extended portion 70 extends rearward from a rear end of the connecting portion 64. In other words, the extended portion 70 extends rearward from the rear end of the upper portion 63 via the connecting portion 64. The cross-sectional shape perpendicular to the longitudinal direction of the extended portion 70 is uniform along the longitudinal direction. As illustrated in FIG. 3 to FIG. 5, the extended portion 70 has a main wall 71, an inner wall 72, an outer wall 73, a base lip 74, an inner lip 75, an outer lip 76, a cover lip 77, an inner engagement lip 78a, an outer engagement lip 78b, an inner rib 79a, and an outer rib 79b.

The main wall 71, the inner wall 72, and the outer wall 73 are plate-shaped. When the extended portion 70 is viewed along the longitudinal direction, the inner wall 72 extends from an inner end of the main wall 71, and the outer wall 73 extends from an outer end of the main wall 71. The inner wall 72 and the outer wall 73 extend in substantially the same direction from the main wall 71. In this respect, the cross-sectional shape perpendicular to the longitudinal direction of the extended portion 70 is substantially C-shaped. A proximal end portion of the outer wall 73 is thinner than a proximal end portion of the inner wall 72. In this respect, the outer wall 73 is more easily bent and deformed with respect to the main wall 71 than the inner wall 72. The base lip 74, the inner lip 75, the outer lip 76, and the cover lip 77 are thin plate-shaped. The base lip 74 projects from an outer face of the main wall 71. The inner lip 75 projects from an outer face of the inner wall 72. The outer lip 76 projects from an outer face of the outer wall 73. Here, the outer face of the main wall 71, the outer face of the inner wall 72, and the outer face of the outer wall 73 are faces opposite to the faces facing a space surrounded by the main wall 71, the inner wall 72, and the outer wall 73. The cover lip 77 projects from a distal end of the outer wall 73 toward a distal end of the inner wall 72. The cover lip 77 is a larger lip than the base lip 74, the inner lip 75, and the outer lip 76.

The inner engagement lip 78a projects from the distal end of the inner wall 72. The inner engagement lip 78a projects in a direction opposite to the direction from the inner wall 72 toward the outer wall 73. The outer engagement lip 78b projects from the distal end of the outer wall 73. The outer engagement lip 78b projects in a direction opposite to the direction from the outer wall 73 toward the inner wall 72. The inner engagement lip 78a and the outer engagement lip 78b are thicker and have a shorter length in the projecting direction than the base lip 74, the inner lip 75, the outer lip 76, and the cover lip 77. In this respect, the inner engagement lip 78a and the outer engagement lip 78b are less deformable than the base lip 74, the inner lip 75, the outer lip 76, and the cover lip 77.

The inner rib 79a projects from the outer face of the inner wall 72. The inner rib 79a is formed on the inner wall 72 between the inner lip 75 and the inner engagement lip 78a. The height of the inner rib 79a is very small. The outer rib 79b projects from the outer face of the outer wall 73. The outer rib 79b is formed on the outer wall 73 between the outer lip 76 and the outer engagement lip 78b. The height of the outer rib 79b is very small.

### <End Cap 80>

As illustrated in FIG. 3 to FIG. 5, the end cap 80 has an upper wall 81, an inner engagement wall 82, an outer engagement wall 83, a pinching wall 84, a guide wall 85, an inner protrusion 86, an outer protrusion 87, and a cap main body 88. A material of the end cap 80 may be, for example, a resin material.

The upper wall 81, the inner engagement wall 82, the outer engagement wall 83, the pinching wall 84, and the guide wall 85 are all rectangular plate-shaped. The plate thickness directions of the upper wall 81 and the guide wall 85 are substantially the same. The plate thickness directions of the inner engagement wall 82, the outer engagement wall 83, and the pinching wall 84 are substantially the same. When the upper wall 81 is viewed along the longitudinal direction, the inner engagement wall 82 extends downward from an intermediate portion of the upper wall 81. On the other hand, when the upper wall 81 is viewed along the longitudinal direction, the outer engagement wall 83 extends upward and downward from an outer end of the upper wall 81. Further, when the upper wall 81 is viewed along the longitudinal direction, the pinching wall 84 extends downward from an inner end of the upper wall 81. Therefore, in the thickness direction X, the inner engagement wall 82 faces the outer engagement wall 83 and faces the pinching wall 84. A lower end of the inner engagement wall 82 is positioned lower than a lower end of the outer engagement wall 83 and a lower end of the pinching wall 84. A front end of the inner engagement wall 82 coincides with both a front end of the outer engagement wall 83 and a front end of the pinching wall 84. In contrast, a rear end of the inner engagement wall 82 and a rear end of the pinching wall 84 generally coincide with each other. A rear end of the outer engagement wall 83 is positioned rearward relative to the rear end of the inner engagement wall 82. The guide wall 85 extends from the lower end of the inner engagement wall 82 in the plate thickness direction of the inner engagement wall 82. The rear end of the outer engagement wall 83 may be positioned forward relative to the rear end of the inner engagement wall 82.

The inner protrusion 86 and the outer protrusion 87 are both rib-shaped. The inner protrusion 86 projects from the inner engagement wall 82 toward the outer engagement wall 83. The inner protrusion 86 is provided along the longitudinal direction of the inner engagement wall 82. The outer protrusion 87 projects from the outer engagement wall 83 toward the inner engagement wall 82. The outer protrusion 87 is provided along the longitudinal direction of the outer engagement wall 83. In the plate thickness direction of the upper wall 81, a distance from the upper wall 81 to the inner protrusion 86 is longer than that from the upper wall 81 to the outer protrusion 87. Thus, an upper end of the inner protrusion 86 is positioned lower than an upper end of the outer protrusion 87.

The cap main body 88 is plate-shaped. The plate thickness direction of the cap main body 88 is orthogonal to that of the outer engagement wall 83. An outer profile of the cap main body 88 when viewed along the plate thickness direction is slightly larger than that of the first molding 40a when viewed along the longitudinal direction. The cap main body 88 is provided at the rear end of the outer engagement wall 83.

As illustrated in FIG. 3, the end cap 80 is attached to a rear end of the first molding 40a. Specifically, the outer engagement wall 83 of the end cap 80 is inserted into the first molding 40a from the rear end of the first molding 40a. At this time, the outer engagement wall 83 of the end cap 80 is sandwiched between the design plate 42 of the first molding 40a and the lower pinching plate 43 and the upper pinching plate 44. Further, the cap main body 88 of the end cap 80 contacts the rear end of the first molding 40a and covers the rear end of the first molding 40a. Although not illustrated, the vehicle door 10 may have a front end cap covering a front end of the first molding 40a.

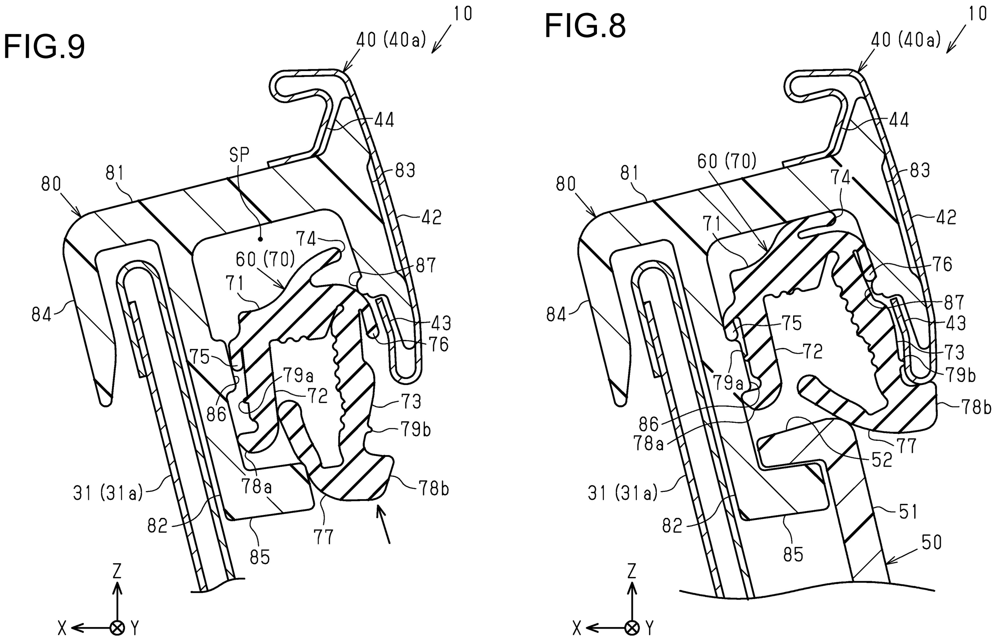

As illustrated in FIG. 1 and FIG. 8, the end cap 80 is positioned near the upper end of the vertical pillar portion 31a of the rear sash 31. At this time, the inner engagement wall 82 and the pinching wall 84 of the end cap 80 sandwich the upper end of the vertical pillar portion 31a of the door frame 30 in the thickness direction X. Further, the locking wall 52 of the sash garnish 50 is locked to the guide wall 85 of the end cap 80.

### <Movable Panel 90>

As illustrated in FIG. 2, the movable panel 90 includes a panel main body 91 and a slider 92. The panel main body 91 is a window glass. A material of the panel main body 91 may be transparent glass or a resin material. The slider 92 is a plate-shaped elongated member. The length of the slider 92 is substantially equal to that of a rear end of the panel main body 91. The slider 92 is joined to an inner face of the panel main body 91 along the rear end of the panel main body 91. At this time, the slider 92 projects rearward with respect to the rear end of the panel main body 91.

As illustrated in FIG. 1, a lower end portion of the movable panel 90 is supported by the window regulator 100. Thus, the movable panel 90 is movable up and down between the fully closed position for fully closing the window opening and the fully open position for fully opening the window opening. Further, a rear end and a front end of the movable panel 90 are accommodated in the glass run 60 regardless of the position of the movable panel 90. As illustrated in FIG. 6, the slider 92 of the movable panel 90 is accommodated in a rear portion 61 of the glass run 60. As a result, a space between the rear end of the movable panel 90 and the rear sash 31 is closed by the rear portion 61 of the glass run 60. Although not illustrated, a front end of the movable panel 90 is accommodated in a front portion 62 of the glass run 60. As a result, a space between the front end of the movable panel 90 and the front sash 32 is closed by the front portion 62 of the glass run 60. In contrast, an upper end of the movable panel 90 is accommodated in the glass run 60 when the movable panel 90 is in the fully closed position. As illustrated in FIG. 7, the upper end of the movable panel 90 in the fully closed position is accommodated in an upper portion 63 of the glass run 60. As a result, a space between the upper end of the movable panel 90 and the upper sash 33 is closed by the upper portion 63 of the glass run 60.

In the movable panel 90, a portion contacting the front portion 62 and a portion contacting the upper portion 63 of the glass run 60 form part of the panel main body 91, whereas a portion contacting the rear portion 61 of the glass run 60 forms part of the panel main body 91 and the slider 92. Therefore, when the movable panel 90 moves up and down, the panel main body 91 slides along the front portion 62 and the upper portion 63 of the glass run 60, while the panel main body 91 and the slider 92 slide along the rear portion 61 of the glass run 60.

As illustrated in FIG. 6, a surface of the panel main body 91 of the movable panel 90 and a surface of the sash garnish 50 lie on substantially the same plane. Thus, the movable panel 90 and the sash garnish 50 are flush with each other. Further, a gap between the movable panel 90 and the sash garnish 50 is closed by the rear portion 61 of the glass run 60.

### <Operation in This Embodiment>

An operation when fitting the glass run 60 to the door frame 30 is described. A process of fitting the glass run 60 follows a process of attaching the first molding 40a integrated with the end cap 80 to the door frame 30. Further, the process of fitting the glass run 60 precedes a process of attaching the sash garnish 50 and the movable panel 90 to the door frame 30.

As illustrated in FIG. 6, the rear portion 61 of the glass run 60 is pushed into a space defined by the rear sash 31 of the door frame 30. Although not illustrated, the front portion 62 of the glass run 60 is pushed into a space defined by the front sash 32 of the door frame 30. As illustrated in FIG. 7, the upper portion 63 of the glass run 60 is pushed into a space defined by the upper sash 33 of the door frame 30 and the sash molding 40. When the rear portion 61, the front portion 62, and the upper portion 63 of the glass run 60 are pushed into the aforementioned spaces, the rear portion 61, the front portion 62, and the upper portion 63 of the glass run 60 are temporarily elastically deformed. When the rear portion 61, the front portion 62, and the upper portion 63 of the glass run 60 are fitted into the spaces, these portions return to their original shapes. Thus, the rear portion 61, the front portion 62, and the upper portion 63 of the glass run 60 are held by the door frame 30.

As illustrated in FIG. 9, the extended portion 70 of the glass run 60 is inserted into a space between the inner engagement wall 82 and the outer engagement wall 83 of the end cap 80 (hereinafter referred to as "accommodation space SP"). At this time, the accommodation space SP opens downward in the up-down direction Z and opens outward in the thickness direction X. Therefore, as indicated by a straight arrow in FIG. 9, the extended portion 70 is pushed toward the accommodation space SP of the end cap 80 upward and inward in the thickness direction X. At this time, the extended portion 70 of the glass run 60 is pushed into the accommodation space SP of the end cap 80 while being elastically deformed, similarly to other portions of the glass run 60. Specifically, the extended portion 70 slides against the inner engagement wall 82, the outer engagement wall 83, the inner protrusion 86, and the outer protrusion 87 of the end cap 80. When the extended portion 70 is pushed deep into the accommodation space SP of the end cap 80, the extended portion 70 is fitted into the end cap 80 as illustrated in FIG. 8. In other words, the extended portion 70 is held by the end cap 80. When the extended portion 70 is fitted, the sash garnish 50 is attached to the vertical pillar portion 31a of the rear sash 31. Further, the movable panel 90 is attached so as to be accommodated in the glass run 60.

As illustrated in FIG. 8, in a state where the extended portion 70 is fitted into the end cap 80, the base lip 74 of the extended portion 70 contacts the upper wall 81 of the end cap 80 in an elastically deformed state. The inner lip 75 of the extended portion 70 contacts the inner engagement wall 82 and the upper end of the inner protrusion 86 of the end cap 80 in an elastically deformed state. The outer lip 76 of the extended portion 70 contacts the outer engagement wall 83 and the upper end of the outer protrusion 87 of the end cap 80 in an elastically deformed state. In these respects, the upper end of the inner protrusion 86 and the upper end of the outer protrusion 87 of the end cap 80 are portions with which the inner lip 75 and the outer lip 76 of the extended portion 70 respectively engage.

Further, the inner rib 79a of the extended portion 70 contacts the inner protrusion 86 of the end cap 80. Similarly, the outer rib 79b of the extended portion 70 contacts the first molding 40a. Thus, displacement of the extended portion 70 relative to the end cap 80 is restricted. Furthermore, the inner engagement lip 78a of the extended portion 70 contacts the inner protrusion 86 of the end cap 80 from below, and the outer engagement lip 78b of the extended portion 70 contacts a lower end of the sash molding 40 from below. Therefore, even if a working entity such as a worker or a working device further pushes the extended portion 70, the extended portion 70 cannot move in that direction.

As illustrated in FIG. 8, the cover lip 77 of the extended portion 70 contacts an upper end of the sash garnish 50. Meanwhile, the outer engagement lip 78b of the extended portion 70 contacts the lower end of the sash molding 40. Thus, the cover lip 77 and the outer engagement lip 78b of the extended portion 70 close a gap between the sash molding 40 and the sash garnish 50. In other words, no gap exists between the sash molding 40 and the sash garnish 50. In these respects, in this embodiment, the cover lip 77 and the outer engagement lip 78b of the extended portion 70 correspond to the "blocking portion."

### <Effects of This Embodiment>

(1) In the vehicle door 10, the cover lip 77 and the outer engagement lip 78b of the extended portion 70 of the glass run 60 close the gap between the sash molding 40 and the sash garnish 50. Therefore, even if flush surfacing of the movable panel 90 and the sash garnish 50 is pursued, generation of the gap between the sash molding 40 and the sash garnish 50 is prevented. As a result, the vehicle door 10 can prevent degradation in the appearance of the vehicle door 10 and generation of wind noise during traveling of the vehicle. Further, the extended portion 70 of the glass run 60 is held by the end cap 80 covering the sash molding 40. Therefore, the vehicle door 10 does not newly require a structure for holding the extended portion 70 of the glass run 60.
(2) In the extended portion 70 of the glass run 60, the inner lip 75 contacts the inner engagement wall 82 of the end cap 80 and also contacts the inner protrusion 86 of the end cap 80 from above. Similarly, the outer lip 76 contacts the outer engagement wall 83 of the end cap 80 and also contacts the outer protrusion 87 of the end cap 80 from above. Therefore, the vehicle door 10 can prevent the extended portion 70 of the glass run 60 from falling off downward from the end cap 80.
(3) When the extended portion 70 of the glass run 60 is fitted into the end cap 80, the extended portion 70 is pushed into the accommodation space SP of the end cap 80. In this case, the extended portion 70 is pushed into the end cap 80 in a direction heading upward as it advances inward of the vehicle door 10, as indicated by the straight arrow in FIG. 9. That is, when the extended portion 70 is pushed into the end cap 80, the inner lip 75 is less likely to engage with the inner protrusion 86. In this respect, in the end cap 80 of this embodiment, the upper end of the inner protrusion 86 is positioned lower than the upper end of the outer protrusion 87. Therefore, when the extended portion 70 is pushed into the end cap 80, the inner lip 75 of the extended portion 70 easily engages with the inner protrusion 86 of the end cap 80. As a result, the vehicle door 10 can enhance workability when fitting the extended portion 70 of the glass run 60 into the end cap 80.
(4) When the extended portion 70 of the glass run 60 is fitted into the end cap 80, the extended portion 70 is pushed into the accommodation space SP of the end cap 80. Therefore, when pushing the extended portion 70 into the end cap 80, the inner engagement lip 78a of the extended portion 70 contacts the inner protrusion 86 of the end cap 80 from below, and the outer engagement lip 78b of the extended portion 70 contacts the sash molding 40 from below. After the extended portion 70 contacts the inner protrusion 86 of the end cap 80 and the sash molding 40, it becomes difficult to further push the extended portion 70. Accordingly, the vehicle door 10 can prevent excessive pushing of the extended portion 70 when fitting the extended portion 70 of the glass run 60 into the end cap 80.
(5) In the vehicle door 10, the extended portion 70 of the glass run 60 contacts the outer engagement wall 83 and the inner engagement wall 82 of the end cap 80 via the plurality of lips and the plurality of ribs. Therefore, the vehicle door 10 can restrict a change in the posture of the extended portion 70 inside the end cap 80.

### <Modifications>

This embodiment may be modified and implemented as follows. This embodiment and the following modifications may be implemented in combination with each other as long as they are technically consistent.

The shape of the extended portion 70 of the glass run 60 may be changed as appropriate. For example, the extended portion 70 need not have at least one of the inner rib 79a and the outer rib 79b. Further, the extended portion 70 need not have at least one of the inner engagement lip 78a and the outer engagement lip 78b. Furthermore, the extended portion 70 need not have at least one of the base lip 74, the inner lip 75, and the outer lip 76.

In the glass run 60, the inner rib 79a of the extended portion 70 may be in contact with the inner engagement wall 82 of the end cap 80. The outer rib 79b of the extended portion 70 may be in contact with the outer engagement wall 83 of the end cap 80, or may be in contact with the outer protrusion 87 of the end cap 80.

In the extended portion 70 of the glass run 60, the shape of the cover lip 77 may be changed as appropriate. The cover lip 77 may have any shape as long as it can close the gap between the sash molding 40 and the sash garnish 50.

The end cap 80 need not have at least one of the inner protrusion 86 and the outer protrusion 87.

In the end cap 80, the shapes of the inner protrusion 86 and the outer protrusion 87 may be changed as appropriate. Further, the positional relationship between the inner protrusion 86 and the outer protrusion 87 in the up-down direction Z may be changed as appropriate.

An engagement configuration between the sash molding 40 and the end cap 80 may be changed as appropriate. For example, the rear end of the sash molding 40 may be bonded to the end cap 80.

The front end of the vehicle door 10 in the fully closed position may correspond to a rear end of the door opening, and the rear end of the vehicle door 10 in the fully open position may correspond to a front end of the door opening. For example, in a case where the vehicle door 10 of the embodiment described above is employed as a front door and the vehicle door of the above-described modification is employed as a rear door, the front door and the rear door open in opposite directions when the vehicle is viewed along the width direction.

The vehicle door 10 may be a sliding door that moves between the fully closed position and the fully open position by moving in the front-rear direction of the vehicle. Further, the vehicle door 10 may be a door that moves between the fully closed position and the fully open position by rotating around an axis extending in the front-rear direction of the vehicle. The vehicle door 10 may be a door employing another opening and closing method.

### <Summary of This Embodiment>

A vehicle door includes: a door frame including a rear sash and a front sash that are spaced apart in a front-rear direction and configured to guide a movable panel to move up and down, and an upper sash connecting an upper end of the rear sash and an upper end of the front sash in the front-rear direction; a glass run including a rear portion to be fitted into the rear sash, a front portion to be fitted into the front sash, and an upper portion to be fitted into the upper sash; a sash molding to be disposed along an upper end of the door frame; a sash garnish covering the rear sash at a position shifted downward relative to the sash molding; and an end cap to be attached to a rear end of the sash molding. The glass run includes an extended portion extending rearward from a rear end of the upper portion and being held by the end cap. The extended portion includes a blocking portion closing a gap between the sash molding and the sash garnish.

In the vehicle door, the blocking portion of the extended portion of the glass run closes the gap between the sash molding and the sash garnish. Therefore, even when flush surfacing of the movable panel and the sash garnish is pursued, generation of the gap between the sash molding and the sash garnish is prevented. As a result, the vehicle door can prevent degradation in appearance of the vehicle door and generation of wind noise during traveling of the vehicle due to the gap. Further, the extended portion of the glass run is held by the end cap covering the sash molding. Therefore, the vehicle door does not newly require a structure for holding the extended portion of the glass run.

In the vehicle door described above, the end cap may include an inner engagement wall and an outer engagement wall facing each other with a space therebetween in the thickness direction of the vehicle door, an inner protrusion projecting from the inner engagement wall toward the outer engagement wall, and an outer protrusion projecting from the outer engagement wall toward the inner engagement wall. The extended portion may include an inner lip contacting the inner engagement wall and contacting the inner protrusion from above, and an outer lip contacting the outer engagement wall and contacting the outer protrusion from above.

In the extended portion of the glass run, the inner lip contacts the inner engagement wall of the end cap and also contacts the inner protrusion of the end cap from above. Similarly, the outer lip contacts the outer engagement wall of the end cap and also contacts the outer protrusion of the end cap from above. Therefore, the vehicle door can prevent the extended portion of the glass run from falling off downward from the end cap.

In the end cap of the vehicle door described above, an upper end of the inner protrusion may be positioned lower than an upper end of the outer protrusion.

When fitting the extended portion of the glass run into the end cap, the extended portion is pushed into a space between the inner engagement wall and the outer engagement wall of the end cap. In this case, the extended portion is pushed into the end cap in a direction heading upward as advancing inward of the vehicle door. That is, when the extended portion is pushed into the end cap, the inner lip of the extended portion is less likely to engage with the inner protrusion. In this respect, in the configuration described above, the upper end of the inner protrusion is positioned lower than the upper end of the outer protrusion. Therefore, when the extended portion is pushed into the end cap, the inner lip of the extended portion easily engages with the inner protrusion of the end cap. As a result, the vehicle door can enhance workability when fitting the extended portion of the glass run into the end cap.

In the vehicle door described above, a lower end of the sash molding may be positioned lower than a lower end of the outer engagement wall, and the extended portion may include an inner engagement lip contacting the inner protrusion from below, and an outer engagement lip contacting the lower end of the sash molding from below.

When fitting the extended portion of the glass run into the end cap, the extended portion is pushed into the space between the inner engagement wall and the outer engagement wall of the end cap. Therefore, when pushing the extended portion into the end cap, the inner engagement lip of the extended portion contacts the inner protrusion of the end cap, and the outer engagement lip of the extended portion contacts the sash molding. After the extended portion contacts the inner protrusion of the end cap and the sash molding, it becomes difficult to further push the extended portion. Accordingly, the vehicle door can prevent excessive pushing of the extended portion when fitting the extended portion of the glass run into the end cap.

In the vehicle door described above, the extended portion may include an inner rib contacting the inner engagement wall of the end cap, and an outer rib contacting one of the outer engagement wall of the end cap and the sash molding.

In the vehicle door, the extended portion of the glass run includes a plurality of lips and a plurality of ribs as structures contacting the end cap and the sash molding. Therefore, the vehicle door can restrict a change in posture of the extended portion inside the end cap.

## Claims

1. A vehicle door (10) comprising:
a door frame (30) including a rear sash (31) and a front sash (32) that are spaced apart in a front-rear direction (Y) and configured to guide a movable panel (90) to move up and down, and an upper sash (33) connecting an upper end of the rear sash (31) and an upper end of the front sash (32) in the front-rear direction (Y);
a glass run (60) including a rear portion (61) to be fitted into the rear sash (31), a front portion (62) to be fitted into the front sash (32), and an upper portion (63) to be fitted into the upper sash (33);
a sash molding (40) to be disposed along an upper end of the door frame (30);
a sash garnish (50) covering the rear sash (31) at a position shifted downward relative to the sash molding (40); and
an end cap (80) to be attached to a rear end of the sash molding (40), wherein
the glass run (60) includes an extended portion (70) extending rearward from a rear end of the upper portion (63) and being held by the end cap (80), and
the extended portion (70) includes a blocking portion closing a gap between the sash molding (40) and the sash garnish (50).

2. The vehicle door (10) according to Claim 1, wherein
the end cap (80) includes an inner engagement wall (82) and an outer engagement wall (83) facing each other with a space therebetween in a thickness direction (X) of the vehicle door (10), an inner protrusion (86) projecting from the inner engagement wall (82) toward the outer engagement wall (83), and an outer protrusion (87) projecting from the outer engagement wall (83) toward the inner engagement wall (82), and
the extended portion (70) includes an inner lip (75) contacting the inner engagement wall (82) and contacting the inner protrusion (86) from above, and an outer lip (76) contacting the outer engagement wall (83) and contacting the outer protrusion (87) from above.

3. The vehicle door (10) according to Claim 2, wherein, in the end cap (80), an upper end of the inner protrusion (86) is positioned lower than an upper end of the outer protrusion (87).

4. The vehicle door (10) according to Claim 2 or 3, wherein
a lower end of the sash molding (40) is positioned lower than a lower end of the outer engagement wall (83), and
the extended portion (70) includes an inner engagement lip (78a) contacting the inner protrusion (86) from below, and an outer engagement lip (78b) contacting the lower end of the sash molding (40) from below.
